# EUROPÄISCHE PATENTSCHRIFT

(11) **EP 2 714 307 B1**
(45) Veröffentlichungstag und Bekanntmachung des Hinweises auf die Patenterteilung: **18.01.2017**
(21) Anmeldenummer: 12721320.5
(22) Anmeldetag: 18.05.2012
(51) Int. Cl.: B23B 3/30, B23B 3/16, B23B 29/24, B23Q 39/00, B23Q 39/02

(54) **WERKZEUGMASCHINE**
MACHINE TOOL
MACHINE-OUTIL

(30) Priorität: 31.05.2011 DE 102011076837
(43) Veröffentlichungstag der Anmeldung: 09.04.2014
(73) Patentinhaber: Gildemeister Italiana S.p.A., 24030 Brembate di Sopra (BG) (IT)
(72) Erfinder: WALZ, Jürgen, 72636 Frickenhausen (DE); RIGOLONE, Franco, I-24010 Ponteranica (BG) (IT); DEURINGER, Gottfried, 82538 Geretsried (DE); ROTA, Renato, I-24030 Carvico (BG) (IT); GERST, Manuel, 33619 Bielefeld (DE)
(74) Vertreter: MERH-IP Matias Erny Reichl Hoffmann Patentanwälte PartG mbB
(86) Internationale Anmeldenummer: PCT/EP2012/059287
(87) Internationale Veröffentlichungsnummer: WO 2012/163699

(56) Entgegenhaltungen:
- EP-A1- 1 160 052
- EP-A1- 1 897 640
- EP-A1- 2 058 071
- DE-A1- 19 528 404
- DE-A1-102006 015 078
- US-A- 5 127 140

## Beschreibung

Die vorliegende Erfindung betrifft eine Werkzeugmaschine, insbesondere Drehmaschine, mit einem Maschinengestell, einer auf einem ersten Trägerabschnitt des Maschinengestells angeordneten ersten Arbeitsspindel zur Aufnahme eines ersten Werkstücks, einer der ersten Arbeitsspindel zugewandten, auf einem zweiten Trägerabschnitt des Maschinengestells angeordneten zweiten Arbeitsspindel zur Aufnahme eines zweiten Werkstücks, wobei die Spindelachse der zweiten Arbeitsspindel parallel, insbesondere koaxial, zu der Spindelachse der ersten Arbeitsspindel ausgerichtet ist, und zumindest zwei verfahrbaren Werkzeugträgerschlitten, auf denen jeweils ein werkzeugtragender Werkzeugträger angeordnet ist.

### Hintergrund der Erfindung

Gattungsgemäße Werkzeugmaschinen umfassen ein Maschinengestell, an dem zumindest zwei zueinander zugewandte, drehbar gelagerte Arbeitsspindeln mit parallelen bzw. koaxialen Spindelachsen vorgesehen sind, wobei an den Arbeitsspindeln jeweils Werkstücke zur Bearbeitung an der Werkzeugmaschine aufgenommen werden können. Für die Bereitstellung der Werkzeuge zur Bearbeitung werden zumindest zwei Werkzeugträger vorgesehen, die auf an dem Maschinengestell angeordneten, verfahrbaren Werkzeugschlitten, insbesondere Kreuzschlitten, bereitgestellt sind und mittels einer oder mehrerer Linearachsen relativ zu den Arbeitsspindeln verfahren werden können (z.B. in X-, Y- und/oder Z-Richtung verfahrbar). Derartige gattungsgemäße Werkzeugmaschinen sind z.B. aus der DD 279 429 A1 oder auch der EP 0 999 002 A1 bekannt.

Generell besteht bei derartigen gattungsgemäßen Werkzeugmaschinen die Anforderung, die Werkzeugmaschine derart bereitzustellen, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger Bauweise der Werkzeugmaschine und mit für den Bearbeiter bzw. Bediener der Werkzeugmaschine möglichst gut einsehbarem Bearbeitungsraum.

Der Erfindung liegt somit die Aufgabe zugrunde, eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger Bauweise der Werkzeugmaschine und mit für den Bearbeiter bzw. Bediener der Werkzeugmaschine möglichst gut einsehbarem Bearbeitungsraum.

US 5,127,140 betrifft eine numerisch gesteuerte Drehmaschine mit zwei Spindeln und drei Werkzeughaltern, wobei zwei Spindelstöcke sich gegenüberliegend angeordnet sind, und wobei jeder der Werkzeughalter in zwei Richtungen verfahrbar ist.

DE 195 28 404 A1 betrifft eine Werkzeugmaschine, umfassend ein Maschinengestell, zwei an dem Maschinengestell einander gegenüberliegend angeordnete Werkstückhalter zur Aufnahme jeweils eines der Werkstücke, wobei die Werkstückhalter jeweils um eine zu einer ersten Raumrichtung im wesentlichen parallel verlaufende Achse drehbar gelagert sind, und einen als Werkzeugrevolver mit einer Revolverachse ausgebildeten Werkzeughalter zur Aufnahme von Werkzeugen, welcher an dem Maschinengestell in einer zu der ersten Raumrichtung im wesentlichen orthogonal verlaufenden zweiten Raumrichtung verschiebbar gelagert ist und welcher um eine zur ersten Raumrichtung und zur zweiten Raumrichtung jeweils im wesentlichen orthogonal verlaufende Rotationsachse drehbar gelagert ist.

EP 1897 640 A1 betrifft eine numerisch gesteuerte Drehmaschine mit zwei Spindeln und drei als Revolverkopf ausgebildeten Werkzeughaltern, wobei zwei Spindelstöcke sich gegenüberliegend angeordnet sind.

EP 2 058 071 A1 betrifft einen Werkzeugrevolver, der um eine Achse drehbar ist und an dem an den äußeren Umfangsflächen eine Vielzahl von Werkzeugen radial angebracht sind.

### Zusammenfassung der Erfindung

Zur Lösung der vorstehend genannten Aufgabe wird gemäß der vorliegenden Erfindung eine Werkzeugmaschine gemäß des unabhängigen Anspruchs 1 vorgeschlagen. Abhängige Ansprüche betreffen bevorzugte Ausgestaltungen der Werkzeugmaschine gemäß der vorliegenden Erfindung.

Der vorliegenden Erfindung liegt die Idee zugrunde, eine kompakte und bearbeitungsflexible Bauweise der Werkzeugmaschine und des Maschinengestells vorzusehen, bei der zwischen zwei Trägerabschnitten des Maschinengestells, die jeweils eine der Arbeitsspindeln tragen und von denen zumindest einer einen Werkzeugträgerschlitten trägt, ein Mittelabschnitt des Maschinengestells vorgesehen ist, an dem zwischen den Arbeitsspindeln ein quer zu den Spindelachsen verfahrbaren Werkzeugträgerschlitten vorgesehen ist, der einen Werkzeugrevolver mit einer Revolverachse quer zu den Spindelachsen trägt.

Mittels der Ausbildung des zwischen den Arbeitsspindeln angeordneten Werkzeugträgers als Werkzeugrevolver wird es vorteilhaft ermöglicht, eine Vielzahl von Werkzeugen zwischen den Arbeitsspindeln bereitzustellen, wobei aufgrund der Anordnung zwischen den Arbeitsspindeln ohne weites Verfahren des den Revolver tragenden Schlittens eine Vielzahl von Werkzeugen für beide Arbeitsspindeln gleichzeitig bereitgestellt werden kann.

Bei einer derartigen vorteilhaft kompakt bereitstellbaren Bauweise der Werkzeugmaschine und des Maschinengestells ergibt sich insbesondere der weitere Vorteil, dass bereits nur mittels des werkzeugtragenden Werkzeugrevolvers, der zwischen den beiden Arbeitsspindeln angeordnet ist, aufgrund der zweckmäßigen Anordnung zwischen den beiden Arbeitsspindeln mit einer Revolverachse quer zu den Spindelachsen mit einem ersten Werkzeug ein an der ersten Arbeitsspindel aufgenommenes erstes Werkstück bearbeitet werden kann während mit einem zweiten Werkzeug auf der gegenüberliegenden Seite des Revolverkopfes des Werkzeugrevolvers ein an der zweiten Arbeitsspindel aufgenommenes zweites Werkstück bearbeitet werden kann.

Folglich kann erfindungsgemäß eine schnelle und effiziente Bearbeitung eines an der ersten Arbeitsspindel aufgenommenen ersten Werkstücks und eines an der zweiten Arbeitsspindel aufgenommenen zweiten Werkstücks hintereinander erzielt werden, da gegebenenfalls keine oder zumindest nur geringe zusätzlichen Werkzeugausrichtungen durch Rotation des Revolverkopfes erforderlich sind, und zudem kann bei vielen Bearbeitungsschritten sogar eine gleichzeitige Bearbeitung des ersten und zweiten Werkstücks jeweils mittels des ersten und zweiten Werkzeugs ermöglicht werden.

Zusammenfassend ermöglicht die Ausbildung des Werkzeugträgers als Werkzeugrevolver aufgrund der Anordnung, bei der der Revolver um eine Revolverachse quer zu den Spindelachsen rotierbar ist, eine äußerst zweckmäßige und vorteilhafte gleichzeitige Ausrichtung von zwei Werkzeugen jeweils auf eine der Arbeitsspindeln mit nur einem zwischen den Arbeitsspindeln vorgesehenen Werkzeugträger. Bei Bauweisen mit insgesamt zwei Werkzeugträgern wird bei gleichzeitigem kompaktem Aufbau der Werkzeugmaschine und des Maschinengestells zumindest eine gleichzeitige Werkstückausrichtung von drei Werkzeugen ermöglicht und bei insgesamt drei oder mehr Werkzeugträgern wird bei gleichzeitigem kompaktem Aufbau der Werkzeugmaschine und des Maschinengestells zumindest eine gleichzeitige Werkstückausrichtung von vier oder mehr Werkzeugen ermöglicht.

Zudem kann durch die Anordnung des Werkzeugrevolvers zwischen den Spindeln mit einer Revolverachse quer zu den Spindelachsen auch noch eine signifikant verbesserte Einsehbarkeit in den Arbeitsraum der Werkzeugmaschine für den Bearbeiter ermöglicht werden, da bei seitlicher Einsehbarkeit auf beide Arbeitsspindeln mehr am Werkzeugrevolver bereitgestellte und verfügbare Werkzeuge durch den Bearbeiter eingesehen werden können, als bei aus dem Stand der Technik bekannten Anordnungen von Werkzeugrevolvern, die seitlich von den Arbeitsspindeln angeordnet sind mit Revolverachsen, die parallel oder im Wesentlichen parallel zu den Spindelachsen ausgerichtet sind. Besonders vorteilhaft kann eine hervorragende Einsehbarkeit in den Bearbeitungsraum und auf den Werkzeugrevolver bei Ausführungsbeispielen gewährleistet werden, bei denen die Spindelachsen im Wesentlichen horizontal ausgerichtet sind und die Revolverachse des zwischen den Spindelachsen angeordneten Werkzeugrevolvers im Wesentlichen horizontal jedoch quer, insbesondere senkrecht, zu den Spindelachsen ausgerichtet ist. Die Einsehrichtung in einen einseitig geöffneten Bearbeitungsraum kann dann in Richtung der Revolverachse ausgerichtet sein, so dass alle Werkzeuge umfangseitig um den Werkzeugrevolver und Werkstücke an beiden Spindeln einsehbar sind.

Gemäß der vorliegenden Erfindung wird im Hinblick auf die vorstehend beschriebenen zugrundeliegenden Erfindungsgedanken eine Werkzeugmaschine, insbesondere Drehmaschine, vorgeschlagen, die ein Maschinengestell mit einem ersten Trägerabschnitt, einem zweiten Trägerabschnitt und einem zwischen dem ersten und dem zweiten Trägerabschnitt angeordneten Mittelabschnitt umfasst. Der erste Trägerabschnitt weist eine erste Werkzeugträgerseite auf, der zweite Trägerabschnitt weist eine zweite Werkzeugträgerseite auf und der Mittelabschnitt weist eine dritte Werkzeugträgerseite auf. Die erste Werkzeugträgerseite des ersten Trägerabschnitts und die zweite Werkzeugträgerseite des zweiten Trägerabschnitts sind auf einer gleichen ersten Seite des Maschinengestells angeordnet - insbesondere vorzugsweise auf der oberen Seite des Maschinengestells - und die dritte Werkzeugträgerseite des Mittelabschnitts ist auf einer zweiten Seite des Maschinengestells angeordnet - insbesondere vorzugsweise auf der vorderen Seite des Maschinengestells, die vorzugsweise von dem Bearbeiter einsehbar ist. Die erste Seite des Maschinengestells ist schräg zur zweiten Seite des Maschinengestells ausgerichtet.

Die erfindungsgemäße Werkzeugmaschine umfasst weiterhin eine auf dem ersten Trägerabschnitt angeordnete erste Arbeitsspindel zur Aufnahme eines ersten Werkstücks und eine der ersten Arbeitsspindel zugewandte, auf dem zweiten Trägerabschnitt angeordnete zweite Arbeitsspindel zur Aufnahme eines zweiten Werkstücks. Die Spindelachse der zweiten Arbeitsspindel ist hierbei parallel, insbesondere koaxial, zu der Spindelachse der ersten Arbeitsspindel ausgerichtet bzw. zumindest durch Verfahren zumindest einer der Arbeitsspindeln parallel, insbesondere koaxial, zu der Spindelachse der ersten Arbeitsspindel ausrichtbar. Vorzugsweise umfasst der erste Trägerabschnitt des Maschinengestells weiterhin eine erste Spindelträgerseite, auf der die erste Arbeitsspindel angeordnet ist, und der zweite Trägerabschnitt umfasst vorzugsweise weiterhin eine zweite Spindelträgerseite, auf der die zweite Arbeitsspindel angeordnet ist. Hierbei sind die erste und die zweite Spindelträgerseite zugunsten einer sehr kompakten Bauweise vorzugsweise auf der gleichen zweiten Seite des Maschinengestells angeordnet, wie die dritte Werkzeugträgerseite des Mittelabschnitts.

Die erfindungsgemäße Werkzeugmaschine umfasst weiterhin zumindest zwei Werkzeugträgereinheiten, nämlich eine Werkzeugträgereinheit umfassend einen auf der ersten Werkzeugträgerseite des ersten Trägerabschnitts oder auf der zweiten Werkzeugträgerseite des zweiten Trägerabschnitts angeordneten ersten Werkzeugträgerschlitten, auf dem ein erster Werkzeugträger angeordnet ist, und eine Werkzeugträgereinheit umfassend einen auf der dritten Werkzeugträgerseite des Mittelabschnitts angeordneten zweiten Werkzeugträgerschlitten, auf dem ein zweiter Werkzeugträger angeordnet ist.

Erfindungsgemäß ist der zweite Werkzeugträgerschlitten in einer ersten Richtung quer, insbesondere senkrecht, zu den Spindelachsen der ersten und zweiten Arbeitsspindeln verfahrbar. Der zweite Werkzeugträger ist erfindungsgemäß als Werkzeugrevolver ausgebildet, der zwischen der ersten Arbeitsspindel und der zweiten Arbeitsspindel angeordnet ist, und einen um eine Revolverachse drehbar gelagerten, werkzeugtragenden Revolverkopf umfasst. Hierbei ist die Revolverachse erfindungsgemäß quer, insbesondere senkrecht, zu den Spindelachsen der ersten und zweiten Arbeitsspindeln ausgerichtet.

Die vorliegende Erfindung ermöglicht es zusammenfassend, eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen bei gleichzeitiger kompakter und kostengünstiger Bauweise der Werkzeugmaschine und mit für den Bearbeiter möglichst gut einsehbarem Bearbeitungsraum ermöglicht wird.

Im Folgenden werden bevorzugte Ausgestaltungen der vorstehend beschriebenen Werkzeugmaschine gemäß der vorliegenden Erfindung beschrieben.

Vorzugsweise ist die Revolverachse weiterhin quer, insbesondere senkrecht, zu der ersten Richtung des zweiten Werkzeugträgerschlittens ausgerichtet. Somit steht die Revolverachse des zwischen den Arbeitsspindeln angeordneten Werkzeugrevolvers vorzugsweise sowohl quer zu den Spindelachsen als auch quer zur Verfahrrichtung des zweiten Werkzeugschlittens. Bei dieser Ausgestaltung kann die Einsehbarkeit in den Arbeitsraum noch weiter erheblich verbessert werden, insbesondere, wenn die Spindelträgerseiten und die dritte Werkzeugträgerseite auf der Vorderseite des Maschinengestells ausgebildet sind, und außerdem kann eine besonders kompakte Bauweise für die Werkzeugträgereinheit umfassend den zweiten Werkzeugträgerschlitten und den als Werkzeugrevolver ausgebildeten zweiten Werkzeugträger bereitgestellt werden, wenn die Revolverachse des Revolverkopfs quer, insbesondere senkrecht, zu der Verfahrrichtung des zweiten Werkzeugschlittens vorgesehen ist.

Vorzugsweise weist der Revolverkopf eine Mehrzahl von Aufnahmen zum Aufnehmen von Werkzeugen oder werkzeughaltenden Werkzeughaltern auf, wobei der Werkzeugrevolver dazu eingerichtet ist, eine Aufnahme durch Rotation des Revolverkopfs um die Revolverachse mit einer der Arbeitsspindeln auszurichten. Somit kann vorteilhaft eine Vielzahl von Werkzeugen bei kompakter Bauweise effizient zwischen den Arbeitsspindeln mit nur einem Werkzeugrevolver bereitgestellt werden, so dass ohne weites Verfahren des zweiten Werkzeugschlittens eine Werkzeugbereitstellung für beide Arbeitsspindeln ermöglicht werden kann.

Vorzugsweise sind die Aufnahmen am Revolverkopf zumindest teilweise paarweise auf gegenüberliegenden Seiten des Revolverkopfs angeordnet, derart, dass zumindest eine Aufnahme mit der zweiten Arbeitsspindel ausgerichtet ist, wenn eine gegenüberliegende Aufnahme mit der ersten Arbeitsspindel ausgerichtet ist. In einer besonders zweckmäßigen bevorzugten Ausgestaltung der vorliegenden Erfindung sind die Aufnahmen am Revolverkopf paarweise auf gegenüberliegenden Seiten des Revolverkopfs angeordnet, derart, dass jeweils eine Aufnahme mit der zweiten Arbeitsspindel ausgerichtet ist, wenn eine andere, gegenüberliegende Aufnahme mit der ersten Arbeitsspindel ausgerichtet ist. Dies ermöglicht es vorteilhaft ein erstes Werkzeug auf die erste Arbeitsspindel auszurichten und gleichzeitig ein auf der anderen Seite des Revolverkopfs angeordnetes zweites Werkzeug auf die zweite Arbeitsspindel auszurichten, wodurch eine wesentlich effizientere Hintereinanderbearbeitung des ersten und zweiten Werkstücks mittels des zwischen den Arbeitsspindeln angeordneten Revolvers ermöglicht wird, und in vielen Bearbeitungsmöglichkeiten sogar eine besondere effizient gleichzeitige Bearbeitung der ersten und zweiten Werkstücke mittels des zwischen den Arbeitsspindeln angeordneten Revolvers ermöglicht wird.

Vorzugsweise ist der Revolverkopf als Radial-Revolverkopf ausgebildet, wobei die Aufnahmen umfangseitig auf dem Revolverkopf angeordnet sind. Dies hat den Vorteil, dass die Werkzeuge aufgrund der radialen Anordnung der Aufnahmen zum Aufnehmen von Werkzeugen oder werkzeugtragenden Werkzeughaltern durch Rotation um die Revolverachse radial auf die Werkstückaufnahmen der Arbeitsspindeln bzw. auf die Spindelachsen ausgerichtet werden können.

Vorzugsweise ist der Revolverkopf als Doppel- oder Mehrfachrevolverkopf ausgebildet, wobei jede einzelne umfängliche Aufnahmenseite des Revolverkopfs bei einem Doppelrevolverkopf zwei Aufnahmen und bei einem Mehrfachrevolverkopf drei oder mehr Aufnahmen aufweist, die in Richtung der Revolverachse nebeneinander angeordnet sind. Somit können bei einfacher und besonders kompakter Bauweise noch wesentlich mehr Werkzeuge effizient für beide Arbeitsspindeln zwischen den Arbeitsspindeln an dem Werkzeugrevolver bereitgestellt werden.

Bei einem als Doppel- oder Mehrfachrevolverkopf ausgebildeten Revolverkopf sind die Werkzeuge in jeweiligen senkrecht zur Revolverachse liegenden Werkzeugebenen angeordnet. Insbesondere umfasst ein Doppelrevolverkopf in der Regel zwei Werkzeugebenen, in denen jeweilige Werkzeugaufnahmen angeordnet sind, und ein Mehrfachrevolverkopf in der Regel drei oder mehr Werkzeugebenen, in denen jeweilige Werkzeugaufnahmen angeordnet sind. Diese Werkzeugebenen sind vorzugsweise in Richtung der Revolverachse parallelverschoben angeordnet.

In einem bevorzugten Ausführungsbeispiel sind die unterschiedlichen Werkzeugebenen des Revolverkopfs unabhängig voneinander steuerbar, so dass der Doppel- oder Mehrfachrevolverkopf zumindest einen ersten Revolverkopfabschnitt mit den Werkzeugen einer ersten Werkzeugebene und einen zweiten Revolverkopfabschnitt mit den Werkzeugen einer zweiten Werkzeugebene umfasst, wobei der erste Revolverabschnitt und der zweite Revolverabschnitt in Revolverachsrichtung nebeneinander angeordnet sind und unabhängig voneinander um die Revolverachse rotierbar sind zur Ausrichtung der Werkzeuge der ersten und zweiten Werkzeugebenen.

Insbesondere - aber nicht ausschließlich - bei einem als Doppel- oder Mehrfachrevolverkopf ausgebildeten Revolverkopf ist der Revolverkopf gemäß einer besonders zweckmäßigen Ausgestaltung in Richtung der Revolverachse verfahrbar, insbesondere mittels einer Linearachse in Säulenbauweise, d.h. mit Linearachssäule, die auf dem zweiten Werkzeugschlitten angeordnet ist und sich in Richtung der Revolverachse erstreckt. Weiterhin kann zweckmäßigerweise eine Rundachse vorgesehen sein, mittels der die Linearsäule rotierbar um die Revolverachse steuerbar ist.

Bei einem als Doppel- oder Mehrfachrevolverkopf ausgebildeten Revolverkopf ist der Revolverkopf vorzugsweise derart in Richtung der Revolverachse verfahrbar, dass der Werkzeugrevolver dazu eingerichtet ist, durch Verfahren des Revolverkopfs in Richtung der Revolverachse eine erste oder eine zweite Aufnahme der in Richtung der Revolverachse nebeneinander angeordneten Aufnahmen einer Seite des Revolverkopfes mit einer der Arbeitsspindeln auszurichten. Dies ermöglicht es durch Verfahren des Revolvers in Richtung der Revolverachse Werkzeuge der verschiedenen Werkzeugebenen des Revolvers mit den Spindelachsen auszurichten.

Alternativ oder zusätzlich ist es auch möglich eine oder beide der Arbeitsspindeln derart vorzusehen, dass sie in Richtung der Revolverachse verfahrbar ist. Außerdem ist es ebenso möglich, Arbeitsspindeln mit parallelen Spindelachsen mit einem Abstand gleich dem Abstand der unterschiedlichen Werkzeugebenen des Revolvers bereitzustellen, um eine erste Werkzeugebene auf die Spindelachse der ersten Arbeitsspindel ausrichten zu können und eine zweite Werkzeugebene auf die Spindelachse der zweiten Arbeitsspindel ausrichten zu können.

Vorzugsweise sind die erste und/oder die zweite Arbeitsspindel in Richtung der Spindelachsen verfahrbar. Dies ermöglicht es vorteilhaft, dass Werkstücke von einer zur anderen Spindel übergeben werden können, z.B. bei Hintereinanderausführung von Front- und Rückseitenbearbeitung desselben Werkstücks an den beiden Arbeitsspindeln.

Vorzugsweise wird der zweite Werkzeugträgerschlitten auf Führungen, insbesondere Führungsschienen, geführt, die vorzugsweise auf der dritten Werkzeugträgerseite des Mittelabschnitts des Maschinengestells befestigt und vorzugsweise in der ersten Richtung ausgerichtet sind.

Vorzugsweise ist der erste Werkzeugträgerschlitten auf der ersten Werkzeugträgerseite des ersten Trägerabschnitts angeordnet, und vorzugsweise umfasst die Werkzeugmaschine weiterhin einen auf der zweiten Werkzeugträgerseite des zweiten Trägerabschnitts angeordneten dritten Werkzeugträgerschlitten, auf dem ein dritter Werkzeugträger angeordnet ist. Somit kann die Werkzeugbereitstellung an der Werkzeugmaschine weiter verbessert werden. Insbesondere kann der erste Werkzeugträger Werkzeuge für die erste Arbeitsspindel bereitstellen, der dritte Werkzeugträger kann Werkzeuge für die zweite Arbeitsspindel bereitstellen und der zweite Werkzeugträger kann aufgrund seiner vorteilhaften Anordnung zwischen den Spindeln Werkzeuge sowohl für die erste als auch für die zweite Arbeitsspindel bereitstellen, ggf. sogar wie vorstehend beschrieben gleichzeitig.

Vorzugsweise ist der erste Werkzeugträgerschlitten parallel oder quer, insbesondere senkrecht, zu den Spindelachsen verfahrbar und vorzugsweise ist zudem der dritte Werkzeugträgerschlitten - falls vorhanden - parallel oder quer, insbesondere senkrecht, zu den Spindelachsen verfahrbar. Somit können die relativen steuerbaren Bewegungsmöglichkeiten zwischen Werkzeugen und Werkstücken weiter verbessert werden. Der erste und/oder der dritte Werkzeugträgerschlitten kann hierbei vorzugsweise als Kreuzschlitten ausgebildet sein.

Vorzugsweise ist der erste Werkzeugträger in der ersten Richtung quer zu den Spindelachsen verfahrbar und/oder in einer zweiten Richtung quer zu der ersten Richtung und quer zu den Spindelachsen verfahrbar. Vorzugsweise ist zudem der dritte Werkzeugträger - falls vorhanden - in der ersten Richtung quer zu den Spindelachsen verfahrbar und/oder in einer zweiten Richtung quer zu der ersten Richtung und quer zu den Spindelachsen verfahrbar. Somit können die relativen steuerbaren Bewegungsmöglichkeiten zwischen Werkzeugen und Werkstücken noch weiter verbessert werden. Der erste, zweite und/oder dritte Werkzeugträgerschlitten kann hierbei vorzugsweise als Kreuzschlitten ausgebildet sein.

Vorzugsweise ist der erste Werkzeugträger als Werkzeugrevolver ausgebildet, der einen um eine parallel zu den Spindelachsen ausgerichtete Revolverachse drehbar gelagerten, werkzeugtragenden Revolverkopf umfasst und vorzugsweise ist auch der dritte Werkzeugträger - falls vorhanden - als Werkzeugrevolver ausgebildet, der einen um eine parallel zu den Spindelachsen ausgerichtete Revolverachse drehbar gelagerten, werkzeugtragenden Revolverkopf umfasst. Da jeder Revolver dazu eingerichtet ist, eine Mehrzahl von Werkzeugen bereitzustellen, kann die Werkzeugbereitstellung an der Werkzeugmaschine hierdurch noch weiter verbessert werden.

Erfindungsgemäß spannen die erste Werkzeugträgerseite des ersten Trägerabschnitts und die zweite Werkzeugträgerseite des zweiten Trägerabschnitts im Wesentlichen eine erste Ebene auf und erfindungsgemäß spannen die erste Spindelträgerseite des ersten Trägerabschnitts und die zweite Spindelträgerseite des zweiten Trägerabschnitts im Wesentlichen eine zweite Ebene auf, wobei die erste Ebene erfindungsgemäß im Wesentlichen schräg zur zweiten Ebene ausgerichtet ist. Somit kann eine besonders zweckmäßige Bauweise des Maschinengestells bereitgestellt werden mit zwei schräg zueinander stehenden Ebenen, wobei die Seite des Maschinengestells der einen Ebene als Spindelträgerseite genutzt werden kann und die Seite des Maschinengestells der anderen Ebene als Werkzeugträgerseite für den ersten und/oder dritten Werkzeugträgerschlitten genutzt werden kann. Hierbei ist es nicht notwendigerweise erforderlich, dass der Grundkörper des Maschinengestells genau ebenflächige Seiten aufweist, die die genannten Ebenen aufspannen. Vielmehr können die vorstehend genannten Ebenen abstrakter verstanden werden als geometrische Ebenen, die im Wesentlichen der Seiten des Maschinengestells entsprechen bzw. im Wesentlichen von den jeweiligen Seiten des Maschinengestells aufgespannt werden, oder die zumindest in denen die Verfahrebenen der Schlitten liegen, die z.B. durch Führungsschienen der Schlitten ausgebildet bzw. aufgespannt werden.

Erfindungsgemäß spannt die dritte Werkzeugträgerseite des Mittelabschnitts im Wesentlichen eine zur zweiten Ebene parallel ausgerichtete dritte Ebene auf, wobei die dritte Ebene vorzugsweise relativ zur zweiten Ebene zum Maschinengestell hin eingerückt ist. Somit kann auf besonders zweckmäßige und kompakte Weise eine Maschinengestellkonstruktion bzw. ein Maschinengestellaufbau bereitgestellt werden, bei der der zweite Werkzeugschlitten für den zweiten Werkzeugträger kompakt in einer Vertiefung zwischen den Arbeitsspindeln bzw. zwischen den Trägerabschnitten des Maschinengestells angeordnet werden kann. Zudem kann zwischen den Trägerabschnitten auf einfache und kompakte Weise ein gut einsehbarer, in Einsehrichtung geöffneter bzw. einseitig geöffneter Bearbeitungsraum geschaffen werden. Bei vertikaler Ausrichtung der Trägerabschnitte, bei der die Spindelachsen horizontal ausgerichtet sind und die erste Richtung im Wesentlichen vertikal zwischen den Trägerabschnitten verläuft, kann weiterhin bei dieser Bauweise eine besonders zweckmäßige Fallschneise für Späne unterhalb der Arbeitsspindeln und der Werkzeugträger geschaffen werden.

Weiterhin sind vorzugsweise Bearbeitungsraumwände vorgesehen, die an jeweiligen Seiten des ersten und zweiten Trägerabschnitts angeordnet sind, welche Seiten sich zwischen den Spindelträgerseiten der Trägerabschnitte und der dritten Werkzeugträgerseite des Mittelabschnitts erstrecken. Hierbei erstrecken sich diese Seiten vorzugsweise - unabhängig von der bevorzugten Bereitstellung von Bearbeitungsraumwänden - senkrecht zu der ersten und der zweiten Ebene ausgerichtet.

Die Bearbeitungswände bilden vorzugsweise einen Bearbeitungsraum zwischen den Trägerabschnitten des Maschinengestells aus. Weiterhin erstrecken sich die Bearbeitungswände vorzugsweise in der ersten Richtung über den Maschinengestellkörper hinaus, d.h. vorzugsweise über die erste Ebene der ersten und zweiten Werkzeugträgerseiten hinaus. Hierbei weisen die Bearbeitungswände vorzugsweise Öffnungen auf, durch die sich die ersten und zweiten Arbeitsspindeln, der erste Werkzeugträger und/oder der dritte Werkzeugträger - falls vorhanden - in den Bearbeitungsraum hinein erstrecken. Dies ermöglicht es vorteilhaft, die Gehäuse und ggf. Schlitten der Arbeitsspindeln und/oder den ersten und gegebenenfalls dritten Werkzeugträgerschlitten vor Spänen aus dem Bearbeitungsraum zu schützen, ohne aufwendige Schutzabdeckungen für die Schlitten und Gehäuse zu benötigen.

Die vorstehend genannten und weitere vorteilhafte Aspekte der vorliegenden Erfindung werden im Folgenden unter Bezugnahme auf die beigefügten Figuren und bevorzugte Ausführungsformen der vorliegenden Erfindung beschrieben.

### Kurzbesehreibung der Figuren

**Fig.1** zeigt beispielhaft eine schematische Darstellung einer Vorderansicht einer Werkzeugmaschine gemäß einem bevorzugten Ausführungsbeispiel der vorliegenden Erfindung.
**Fig. 2** zeigt beispielhaft eine schematische Darstellung einer Perspektivansicht des Maschinengestellaufbaus der Werkzeugmaschine gemäß dem bevorzugten Ausführungsbeispiel der vorliegenden Erfindung aus **Fig. 1****.**
**Fig. 3** zeigt beispielhaft eine schematische Darstellung einer Draufsicht der Werkzeugmaschine gemäß dem bevorzugten Ausführungsbeispiel der vorliegenden Erfindung aus **Fig. 1****.**
**Fig. 4** zeigt beispielhaft eine schematische Darstellung einer Detailansicht des Bearbeitungsraums der Werkzeugmaschine gemäß dem bevorzugten Ausführungs-beispiel der vorliegenden Erfindung aus **Fig. 1****.**

### Ausführliche Beschreibung bevorzugter

### Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

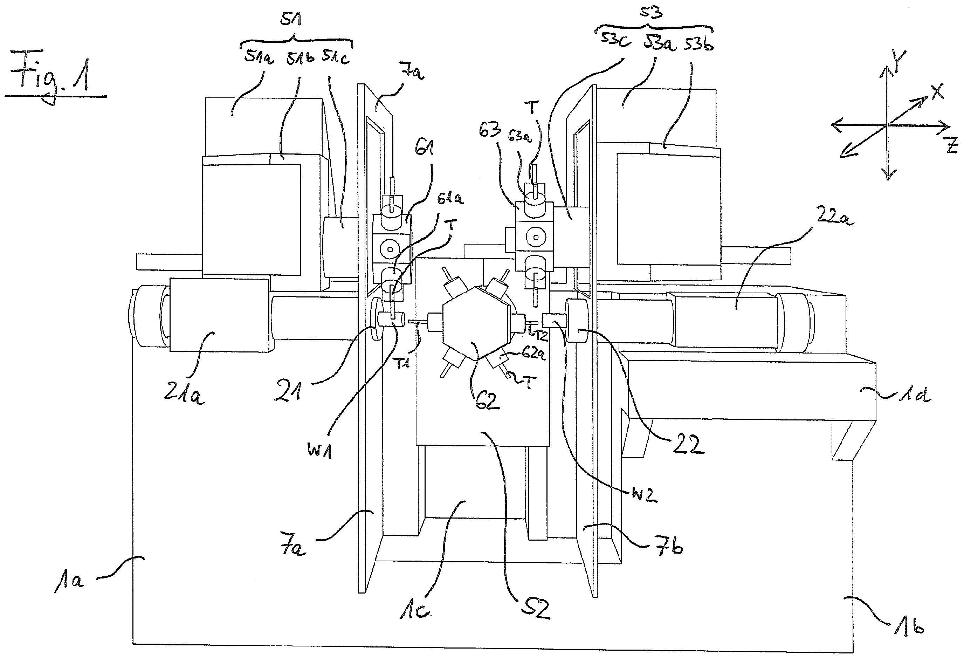

**Fig. 1** zeigt beispielhaft eine schematische Darstellung einer Vorderansicht einer Werkzeugmaschine gemäß einem bevorzugten Ausführungsbeispiel der vorliegenden Erfindung. Die Werkzeugmaschine gemäß **Fig. 1** ist eine Drehmaschine mit einem Maschinengestell 1, das einen ersten Trägerabschnitt 1a, einen zweiten Trägerabschnitt 1b und einen zwischen dem ersten und dem zweiten Trägerabschnitt 1a und 1b angeordneten Mittelabschnitt 1c aufweist.

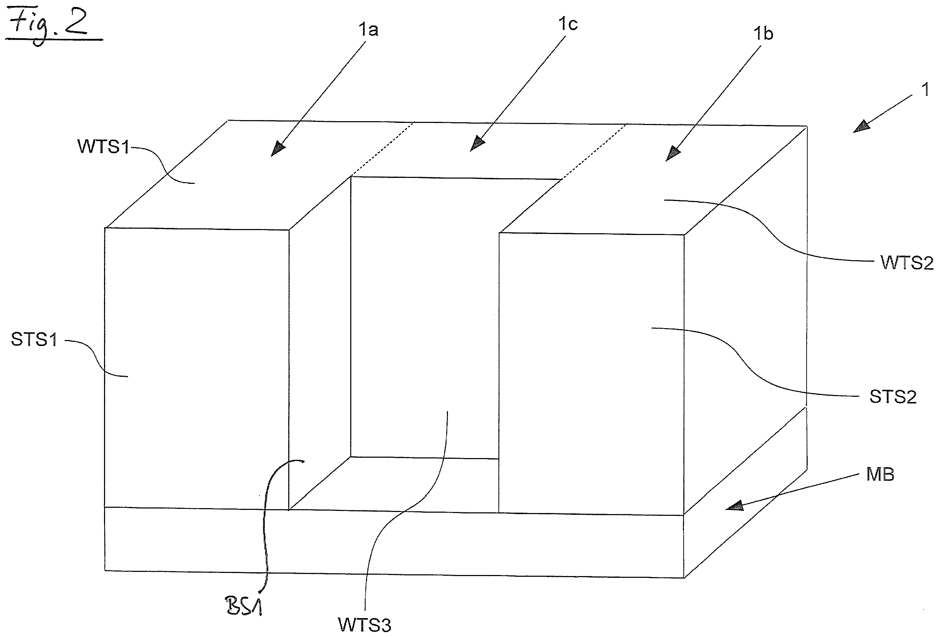

**Fig. 2** zeigt beispielhaft eine schematische Darstellung einer Perspektivansicht des Maschinengestellaufbaus der Werkzeugmaschine gemäß dem bevorzugten Ausführungsbeispiel der vorliegenden Erfindung aus **Fig. 1****.** Wie in **Fig. 2** gezeigt, weist der erste Trägerabschnitt 1a beispielhaft eine erste Spindelträgerseite STS1 und eine erste Werkzeugträgerseite WTS1 auf, die im Wesentlichen in senkrecht zueinander stehenden Ebenen liegen. Der zweite Trägerabschnitt 1b weist analog zu dem ersten Trägerabschnitt 1a beispielhaft eine zweite Spindelträgerseite STS2 und eine zweite Werkzeugträgerseite WTS2 auf, die im Wesentlichen in senkrecht zueinander stehenden Ebenen liegen.

Gemäß **Fig. 2** spannen die erste Werkzeugträgerseite WTS1 des ersten Trägerabschnitts 1a und die zweite Werkzeugträgerseite WTS2 des zweiten Trägerabschnitts 1b im Wesentlichen eine erste Ebene auf, und die erste Spindelträgerseite STS1 des ersten Trägerabschnitts 1a und die zweite Spindelträgerseite STS2 des zweiten Trägerabschnitts 1b spannen im Wesentlichen eine zweite Ebene auf, wobei die erste Ebene im Wesentlichen senkrecht zur zweiten Ebene ausgerichtet ist.

Gemäß der Ausführung nach **Fig. 2** sind die erste Werkzeugträgerseite WTS1 des ersten Trägerabschnitts 1a und die zweite Werkzeugträgerseite WTS2 des zweiten Trägerabschnitts 1b auf der oberen Seite des Maschinengestells 1 angeordnet, und die erste Spindelträgerseite STS1 des ersten Trägerabschnitts 1a und die zweite Spindelträgerseite STS2 des zweiten Trägerabschnitts 1b sind auf der vorderen Seite des Maschinengestells 1 angeordnet. Auf der unteren Seite weist das Maschinengestell einen Maschinenbasisabschnitt MB auf, der eine Stellfläche für die Werkzeugmaschine aufweist.

Der zwischen den Trägerabschnitten 1a und 1b angeordnete Mittelabschnitt 1c des Maschinengestells 1 weist eine dritte Werkzeugträgerseite WTS3 auf. Die dritte Werkzeugträgerseite WTS3 des Mittelabschnitts 1c spannt im Wesentlichen eine zur zweiten Ebene der ersten und zweiten Spindelträgerseiten STS1 und STS2 parallel ausgerichtete dritte Ebene auf, wobei die dritte Ebene relativ zur zweiten Ebene der ersten und zweiten Spindelträgerseiten STS1 und STS2 zum Maschinengestell 1 hin eingerückt ist, d.h. zum Maschinengestell 1 hin insbesondere parallelverschoben ist.

Die erste Werkzeugträgerseite WTS1 des ersten Trägerabschnitts 1a und die zweite Werkzeugträgerseite WTS2 des zweiten Trägerabschnitts 1b sind auf der oberen Seite des Maschinengestells 1 angeordnet, und die erste Spindelträgerseite STS1 des ersten Trägerabschnitts 1a, die zweite Spindelträgerseite STS2 des zweiten Trägerabschnitts 1b und die dritte Werkzeugträgerseite WTS3 des Mittelabschnitts 1c sind auf der vorderen Seite des Maschinengestells 1 angeordnet.

Zwischen den ersten und zweiten Spindelträgerseiten STS1 und STS2 der Trägerabschnitte 1a und 1b und der dritten Werkzeugträgerseite WTS3 des Mittelabschnitts 1c erstrecken sich jeweilige Bearbeitungsraumseiten (siehe z.B. Seite BS1 in Fig. 2), die beispielhaft senkrecht zur der ersten Ebene der ersten und zweiten Werkzeugträgerseiten WTS1 und WTS2 der Trägerabschnitte 1a und 1b und senkrecht zu der zweiten Ebene der ersten und zweiten Spindelträgerseiten STS1 und STS2 der Trägerabschnitte 1a und 1b ausgerichtet sind. Die Bearbeitungsraumseiten definieren zusammen mit der dritten Werkzeugträgerseite WTS3 eine Einbuchtung im Maschinengestell 1, die vorteilhaft einen Bearbeitungsraum an der Werkzeugmaschine definieren kann bzw. zudem bei vertikaler Ausrichtung, wie in **Fig. 2** eine Fallschneise für Späne.

In diesem Ausführungsbeispiel sind die Trägerabschnitte 1a bis 1c miteinander verbunden, können jedoch in anderen Ausführungsbeispielen der Erfindung auch getrennt voneinander bereitgestellt werden.

Für die genauere Beschreibung der Werkzeugmaschine gemäß dieses Ausführungsbeispiels wird im Folgenden wieder auf **Fig. 1** verwiesen. Die Werkzeugmaschine umfasst eine auf der ersten Spindelträgerseite STS1 des ersten Trägerabschnitts 1a angeordnete, an einem Spindelgehäuse 21a gehaltene erste Arbeitsspindel 21 zur Aufnahme eines ersten Werkstücks W1 und eine der ersten Arbeitsspindel 21 zugewandte, auf der zweiten Spindelträgerseite STS2 des zweiten Trägerabschnitts 1b angeordnete zweite Arbeitsspindel 22 zur Aufnahme eines zweiten Werkstücks W2. Die zweite Arbeitsspindel 22 wird an einem Spindelgehäuse 22a gehalten.

Die Spindelachse der zweiten Arbeitsspindel 22 ist in diesem Ausführungsbeispiel koaxial zu der Spindelachse der ersten Arbeitsspindel 21 ausgerichtet, kann jedoch auch parallel, jedoch nicht koaxial ausgerichtet sein, oder parallel ausgerichtet sein und durch Verfahren koaxial ausrichtbar sein.

In diesem Ausführungsbeispiel ist die zweite Arbeitsspindel 22 auf einem auf Führungen geführten Spindelschlitten angeordnet und in Richtung Z parallel zu den Spindelachsen verfahrbar. Die Führungen (nicht dargestellt) verlaufen in diesem Ausführungsbeispiel beispielhaft an der Spindelträgerseite STS2 des zweiten Trägerabschnitts 1b, können jedoch alternativ auch auf einem Vorsprungabschnitt 1d des Maschinengestells 1 angeordnet sein, der an der Spindelträgerseite des zweiten Trägerabschnitts 1b angeordnet sein kann. Analog können auch Ausführungsbeispiele vorgesehen werden, bei denen die erste Spindel 21 oder beide Arbeitsspindeln 21 und 22 in Richtung der Spindelachsen verfahrbar sind.

Die Werkzeugmaschine umfasst weiterhin einen auf der ersten Werkzeugträgerseite WTS1 des ersten Trägerabschnitts 1a angeordneten ersten Werkzeugträgerschlitten 51, auf dem ein erster Werkzeugträger 61 angeordnet ist, und einen auf der zweiten Werkzeugträgerseite WTS2 des zweiten Trägerabschnitts 1b angeordneten dritten Werkzeugträgerschlitten 53, auf dem ein dritter Werkzeugträger 63 angeordnet ist.

Der erste und der dritte Werkzeugträger 61 und 63 sind in diesem Ausführungsbeispiel als Werkzeugrevolver ausgebildet, die jeweils einen um eine parallel zu den Spindelachsen ausgerichtete Revolverachse drehbar gelagerten, werkzeugtragenden Revolverkopf umfassen. Anstelle eines Werkzeugrevolvers ist es jedoch auch möglich, z.B. eine Fräs-/Bohrspindel mit einer Werkzeugaufnahme für den ersten und/oder dritten Werkzeugträger 61, 63 vorzusehen.

Erfindungsgemäß ist in dem Ausführungsbeispiel gemäß **Fig. 1** ein auf der dritten Werkzeugträgerseite WTS3 des Mittelabschnitts 1c angeordneter zweiter Werkzeugträgerschlitten 52 vorgesehen, auf dem ein zweiter Werkzeugträger 62 angeordnet ist. Der zweite Werkzeugträgerschlitten 52 ist in vertikaler Richtung Y in **Fig. 1** und insbesondere senkrecht zu den Spindelachsen der ersten und zweiten Arbeitsspindeln 21 und 22 verfahrbar.

Insbesondere ist der zweite Werkzeugträger 62 als Werkzeugrevolver ausgebildet, der zwischen der ersten Arbeitsspindel 21 und der zweiten Arbeitsspindel 22 angeordnet ist, und einen um eine Revolverachse drehbar gelagerten, werkzeugtragenden Revolverkopf 62 umfasst. Die Revolverachse des Revolverkopfs 62 ist in X-Richtung und somit senkrecht zu den Spindelachsen der ersten und zweiten Arbeitsspindeln 21 und 22 ausgerichtet, und weiterhin ist die Revolverachse des Revolverkopfs 62 senkrecht zu der vertikalen Richtung Y ausgerichtet, in der der zweite Werkzeugträgerschlitten 52 verfahrbar ist.

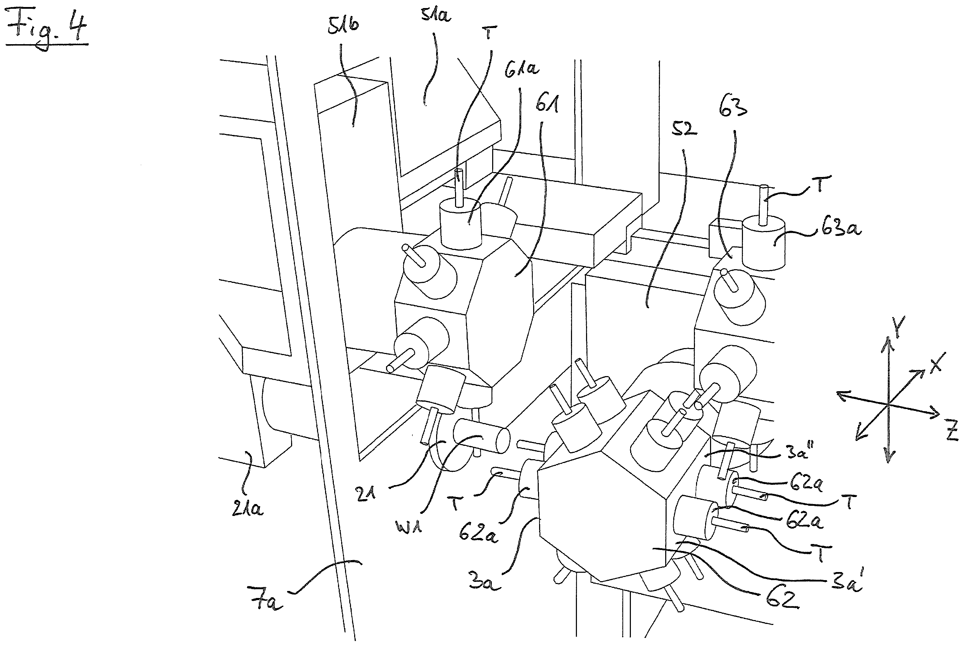

Der Revolverkopf 62 weist eine Mehrzahl von Aufnahmen 3a, 3a' und 3a" (siehe z.B. **Fig. 4****)** zum Aufnehmen von werkzeughaltenden Werkzeughaltern 62a auf, die ihrerseits jeweils Werkzeuge T halten. Der Revolverkopf 62 ist als Radial-Revolverkopf ausgebildet, wobei die Aufnahmen 3a, 3a' und 3a" umfangseitig auf dem Revolverkopf 62 angeordnet sind. Der Werkzeugrevolver ist dazu eingerichtet, eine Aufnahme 3a durch Rotation des Revolverkopfs 62 um die Revolverachse mit einer der Arbeitsspindeln 21 bzw. 22 auszurichten, um das von dem an der Aufnahme 3a aufgenommenen Werkzeughalter 62a gehaltene Werkzeug T mit einer der Arbeitsspindeln 21 bzw. 22 auszurichten.

Wie in **Fig. 1** und **Fig. 4** dargestellt, sind die Aufnahmen 3a, 3a' des Revolverkopfs 62 paarweise auf gegenüberliegenden Seiten auf dem Revolverkopf 62 angeordnet, so dass die Werkzeughalter 62a paarweise auf gegenüberliegenden Seiten auf dem Revolverkopf 62 angeordnet sind, und zwar derart, dass jeweils eine erste Aufnahme 3a' mit darin aufgenommenem Werkzeughalter 62a mit der zweiten Arbeitsspindel 22 ausgerichtet ist, wenn eine andere, gegenüberliegende zweite Aufnahme 3a mit darin aufgenommenem Werkzeughalter 62a mit der ersten Arbeitsspindel 21 ausgerichtet ist.

Dies ermöglicht eine vorteilhafte gleichzeitige Ausrichtung von Werkzeugen T auf beide Arbeitsspindeln 21 und 22 bereits nur mit dem einen Werkzeugrevolver mit Revolverkopf 62. In **Fig. 1** ist zum Beispiel ein Werkzeug T1 zur Bearbeitung auf das in der ersten Arbeitsspindel 21 aufgenommene Werkstück W1 ausgerichtet und ein gegenüberliegendes Werkzeug T2 ist zur Bearbeitung auf das in der zweiten Arbeitsspindel 22 aufgenommene Werkstück W2 ausgerichtet. Die Werkstücke T1 und T2 können somit mittels des Werkzeugrevolvers 62 gleichzeitig bearbeitet werden.

Weiterhin sind bei der Werkzeugmaschine gemäß **Fig. 1** Bearbeitungsraumwände 7a und 7b vorgesehen, die an Bearbeitungsraumseiten (siehe z.B. BS1 in **Fig. 1****)** des Trägerabschnitts 1 angeordnet sind, die sich zwischen den Spindelträgerseiten STS1 und STS2 der Trägerabschnitte 1a und 1b und der dritten Werkzeugträgerseite WTS3 des Mittelabschnitts 1c erstrecken.

Die Bearbeitungswände 7a und 7b bilden vorteilhaft einen Bearbeitungsraum zwischen den Trägerabschnitten 1a und 1b des Maschinengestells 1 aus. Weiterhin erstrecken sich die Bearbeitungswände 7a und 7b vertikal nach oben und horizontal nach vorne über den Maschinengestellkörper hinaus.

Hierbei weisen die Bearbeitungswände 7a und 7b Öffnungen zum Bearbeitungsraum auf, durch die sich die ersten und zweiten Arbeitsspindeln 21 und 22, der erste Werkzeugträger 61 und der dritte Werkzeugträger 63 in den Bearbeitungsraum hinein erstrecken. Dies ermöglicht es vorteilhaft, die Gehäuse 21a und 22a der Arbeitsspindeln und den ersten und dritten Werkzeugträgerschlitten 51 und 53 vor Spänen aus dem Bearbeitungsraum zu schützen, ohne aufwendige Schutzabdeckungen für die Schlitten und Gehäuse zu benötigen.

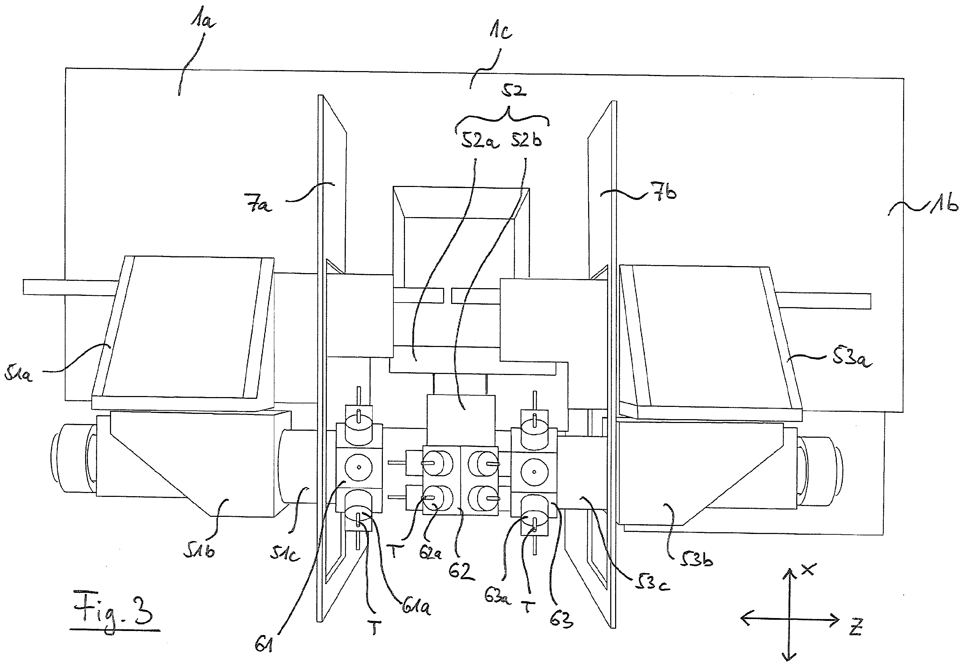

**Fig. 3** zeigt beispielhaft eine schematische Darstellung einer Draufsicht der Werkzeugmaschine gemäß dem bevorzugten Ausführungsbeispiel der vorliegenden Erfindung aus **Fig. 1****.**

In **Fig. 3** ist gezeigt, dass der erste und dritte Werkzeugträgerschlitten 51 und 53 in dieser Ausführungsform als Kreuzschlitten ausgebildet sind, wobei ein erster jeweiliger Teilschlitten 51a bzw. 53a in Richtung Z der Spindelachsen verfahrbar auf der jeweiligen Werkzeugträgerseite WTS1 bzw. WTS2 des jeweiligen Trägerabschnitts 1a bzw. 1b angeordnet ist. Auf dem ersten jeweiligen Teilschlitten 51a bzw. 53a sind wiederum jeweilige verfahrbare Teilschlitten 51b bzw. 53b angeordnet, an denen die Werkzeugrevolver jeweils an Gehäusen 51c und 53c drehbar gelagert sind um Revolverachsen, die sich parallel zu den Spindelachsen erstrecken. Die Gehäuse 51c und 53c können hierbei Antriebe zum Steuern der Revolver umfassen und dienen weiterhin dazu, sich von den neben den Spindelgehäusen 21a und 22a angeordneten (relativ zu den Spindelachsen gesehen) Teilschlitten in den Bearbeitungsraum hinein zu erstrecken, derart dass die Werkzeugträger 61 und 63 im Bearbeitungsraum neben den Spindeln 21a und 22a angeordnet werden können (relativ zu den Spindelachsen gesehen). In diesem Ausführungsbeispiel sind die zweiten Teilschlitten 51b bzw. 53b senkrecht zu den Spindelachsen verfahrbar, insbesondere in der gleichen Richtung Y, wie der zweite Werkzeugträgerschlitten 52, d.h. beispielsweise in vertikaler Richtung in dieser Ausführungsform.

**Fig. 4** zeigt beispielhaft eine schematische Darstellung einer Detailansicht des Bearbeitungsraums der Werkzeugmaschine gemäß dem bevorzugten Ausführungsbeispiel der vorliegenden Erfindung aus **Fig. 1****.**

In **Fig. 4** ist erkennbar, dass der Werkzeugrevolver 62 gemäß dieser Ausführungsform als Doppelrevolverkopf ausgebildet ist, wobei jede Seite des Revolverkopfs 62 zumindest zwei Aufnahmen 3a' und 3a" aufweist, die in Richtung X der Revolverachse jeweils nebeneinander angeordnet sind.

Der Revolverkopf 62 ist gemäß dieser Ausführungsform für die Ausrichtung der Werkzeuge T bei koaxialen Arbeitsspindeln in Richtung X der Revolverachse verfahrbar, derart, dass der Werkzeugrevolver dazu eingerichtet ist, durch Verfahren des Revolverkopfs 62 in Richtung X der Revolverachse eine erste oder eine zweite Aufnahme 3a' bzw. 3a" einer Seite des Revolverkopfes mit einer der Arbeitsspindeln 21 bzw. 22 auszurichten. Hierbei kann eine auf dem Werkzeugträgerschlitten 52a angeordnete Teleskopachseinheit 52b vorgesehen sein, derart, dass der Revolverkopf 62 mittels der Teleskopachseinheit 52b in Richtung X verfahrbar ist (siehe **Fig. 3****).**

Zusammenfassend ermöglicht es die vorliegende Erfindung eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen bei gleichzeitiger kompakter Bauweise der Werkzeugmaschine und mit für den Bearbeiter möglichst gut einsehbarem Bearbeitungsraum ermöglicht wird.

## Patentansprüche

1. Werkzeugmaschine, umfassend:
- ein Maschinengestell (1) mit einem ersten Trägerabschnitt (1a), einem zweiten Trägerabschnitt (1b) und einem zwischen dem ersten und dem zweiten Trägerabschnitt angeordneten Mittelabschnitt (1c),
wobei der erste Trägerabschnitt (1a) eine erste Werkzeugträgerseite (WTS1) aufweist, der zweite Trägerabschnitt (1b) eine zweite Werkzeugträgerseite (WTS2) aufweist und der Mittelabschnitt (1c) eine dritte Werkzeugträgerseite (WTS3) aufweist, und
wobei die erste Werkzeugträgerseite (WTS1) des ersten Trägerabschnitts (1a) und die zweite Werkzeugträgerseite (WTS2) des zweiten Trägerabschnitts (1b) auf einer gleichen ersten Seite des Maschinengestells (1) angeordnet sind und die dritte Werkzeugträgerseite (WTS3) des Mittelabschnitts (1c) auf einer zweiten Seite des Maschinengestells (1) angeordnet ist;
- eine auf dem ersten Trägerabschnitt (1a) angeordnete erste Arbeitsspindel (21) zur Aufnahme eines ersten Werkstücks (W1);
- eine der ersten Arbeitsspindel (21) zugewandte, auf dem zweiten Trägerabschnitt (1b) angeordnete zweite Arbeitsspindel (22) zur Aufnahme eines zweiten Werkstücks (W2),
wobei die Spindelachse der zweiten Arbeitsspindel (22) parallel oder koaxial zu der Spindelachse der ersten Arbeitsspindel (21) ausgerichtet ist;
- einen auf der ersten Werkzeugträgerseite (WTS1) des ersten Trägerabschnitts (1a) oder auf der zweiten Werkzeugträgerseite (WTS2) des zweiten Trägerabschnitts (1b) angeordneten ersten Werkzeugträgerschlitten (51; 53), auf dem ein erster Werkzeugträger (61; 62) angeordnet ist; und
- einen auf der dritten Werkzeugträgerseite (WTS3) des Mittelabschnitts (1c) angeordneten zweiten Werkzeugträgerschlitten (52), auf dem ein zweiter Werkzeugträger (62) angeordnet ist,
wobei der zweite Werkzeugträgerschlitten (52) in einer ersten Richtung (Y) quer oder senkrecht zu den Spindelachsen der ersten und zweiten Arbeitsspindeln (21, 22) verfahrbar ist,
wobei der zweite Werkzeugträger als Werkzeugrevolver ausgebildet ist, der zwischen der ersten Arbeitsspindel (21) und der zweiten Arbeitsspindel (22) angeordnet ist, und einen um eine Revolverachse drehbar gelagerten, werkzeugtragenden Revolverkopf (62) umfasst,
wobei die Revolverachse quer oder senkrecht zu den Spindelachsen der ersten und zweiten Arbeitsspindeln (21, 22) ausgerichtet ist;
**dadurch gekennzeichnet, dass**
die erste Werkzeugträgerseite (WTS1) des ersten Trägerabschnitts (1a) und die zweite Werkzeugträgerseite (WTS2) des zweiten Trägerabschnitts (1b) im Wesentlichen eine erste Ebene aufspannen, die schräg zu einer zweiten Ebene und zu einer zur zweiten Ebene parallel ausgerichteten dritten Ebene ausgerichtet sind, wobei die zweite Ebene im Wesentlichen von einer ersten Spindelträgerseite (STS1) des ersten Trägerabschnitts (1a), die die erste Arbeitsspindel (21) trägt, und einer zweiten Spindelträgerseite (STS2) des zweiten Trägerabschnitts (1b), die die zweite Arbeitsspindel (22) trägt, aufgespannt wird und die dritte Ebene im Wesentlichen von der dritten Werkzeugträgerseite (WTS3) des Mittelabschnitts (1c), die den dritten Werkzeugträgerseite (WTS3) trägt, aufgespannt wird.

2. Werkzeugmaschine nach Anspruch 1, **dadurch gekennzeichnet, dass**
die Revolverachse weiterhin quer oder senkrecht zu der ersten Richtung (Y) des zweiten Werkzeugträgerschlittens (52) ausgerichtet ist.

3. Werkzeugmaschine nach Anspruch 1 oder 2, **dadurch gekennzeichnet, dass**
der Revolverkopf (62) eine Mehrzahl von Aufnahmen (3a, 3a', 3a") zum Aufnehmen von Werkzeugen (T) oder werkzeughaltenden Werkzeughaltern (62a) aufweist, wobei der Werkzeugrevolver dazu eingerichtet ist, eine Aufnahme (3a) durch Rotation des Revolverkopfs (62) um die Revolverachse mit einer der Arbeitsspindeln (21, 22) auszurichten.

4. Werkzeugmaschine nach Anspruch 3, **dadurch gekennzeichnet, dass**
die Aufnahmen (3a, 3a') zumindest teilweise paarweise auf gegenüberliegenden Seiten auf dem Revolverkopf (62) angeordnet sind, derart, dass zumindest eine Aufnahme (3a') mit der zweiten Arbeitsspindel (22) ausgerichtet ist, wenn eine gegenüberliegende Aufnahme (3a) mit der ersten Arbeitsspindel (21) ausgerichtet ist; oder
die Aufnahmen (3a, 3a') paarweise auf gegenüberliegenden Seiten auf dem Revolverkopf (62) angeordnet sind, derart, dass jeweils eine Aufnahme (3a') mit der zweiten Arbeitsspindel (22) ausgerichtet ist, wenn eine andere, gegenüberliegende Aufnahme (3a) mit der ersten Arbeitsspindel (21) ausgerichtet ist.

5. Werkzeugmaschine nach einem der vorhergehenden Ansprüche, **dadurch gekennzeichnet, dass**
der Revolverkopf (62) als Radial-Revolverkopf ausgebildet ist, wobei die Aufnahmen (3a, 3a', 3a") umfangseitig auf dem Revolverkopf (62) angeordnet sind.

6. Werkzeugmaschine nach einem der vorhergehenden Ansprüche, **dadurch gekennzeichnet, dass**
der Revolverkopf (62) als Doppel- oder Mehrfachrevolverkopf ausgebildet ist, wobei jede Seite des Revolverkopfs zumindest zwei Aufnahmen (3a', 3a") aufweist, die in Richtung (X) der Revolverachse nebeneinander angeordnet sind.

7. Werkzeugmaschine nach Anspruch 6, **dadurch gekennzeichnet, dass**
der Revolverkopf (62) in Richtung (X) der Revolverachse verfahrbar ist, derart, dass der Werkzeugrevolver dazu eingerichtet ist, durch Verfahren des Revolverkopfs (62) in Richtung (X) der Revolverachse eine erste oder eine zweite Aufnahme (3a'; 3a") einer Seite des Revolverkopfes (62) mit einer der Arbeitsspindeln (21; 22) auszurichten.

8. Werkzeugmachine nach einem der vorhergehenden Ansprüche, **dadurch gekennzeichnet, dass**
die erste und/oder zweite Arbeitsspindel (21; 22) in Richtung (Z) der Spindelachsen verfahrbar ist.

9. Werkzeugmaschine nach einem der vorhergehenden Ansprüche, **dadurch gekennzeichnet, dass**
der zweite Werkzeugträgerschlitten (52) auf Führungen geführt wird, die auf der dritten Werkzeugträgerseite (WTS3) des Mittelabschnitts (1c) des Maschinengestells (1) befestigt sind und in der ersten Richtung (Y) ausgerichtet sind.

10. Werkzeugmaschine nach einem der vorhergehenden Ansprüche, **dadurch gekennzeichnet, dass**
der erste Werkzeugträgerschlitten (51) auf der ersten Werkzeugträgerseite (WTS1) des ersten Trägerabschnitts (1a) angeordnet ist, und die Werkzeugmaschine weiterhin einen auf der zweiten Werkzeugträgerseite (WTS2) des zweiten Trägerabschnitts (1b) angeordneten dritten Werkzeugträgerschlitten (53) umfasst, auf dem ein dritter Werkzeugträger (63) angeordnet ist.

11. Werkzeugmaschine nach Anspruch 10, **dadurch gekennzeichnet, dass**
der erste und/oder dritte Werkzeugträgerschlitten (51; 53) parallel und/oder quer oder senkrecht zu den Spindelachsen verfahrbar ist.

12. Werkzeugmaschine nach Anspruch 10 oder 11, **dadurch gekennzeichnet, dass**
der erste und/oder dritte Werkzeugträger (61; 63) in der ersten Richtung (Y) quer zu den Spindelachsen verfahrbar ist und/oder in einer zweiten Richtung (X) quer zu der ersten Richtung (Y) und quer zu den Spindelachsen verfahrbar ist.

13. Werkzeugmaschine nach einem der Ansprüche 10 bis 12, **dadurch gekennzeichnet, dass**
der erste und/oder dritte Werkzeugträger (61; 63) als Werkzeugrevolver ausgebildet ist, der einen um eine parallel zu den Spindelachsen ausgerichtete Revolverachse drehbar gelagerten, werkzeugtragenden Revolverkopf umfasst.

14. Werkzeugmaschine nach einem der vorhergehenden Ansprüche, **dadurch gekennzeichnet, dass**
die dritte Ebene relativ zur zweiten Ebene zum Maschinengestell (1) hin eingerückt ist.

## Claims

1. A machine tool comprising:
- a machine frame (1) having a first carrier portion (1a), a second carrier portion (1b) and a middle portion (1c) arranged between said first and second carrier portions,
wherein said first carrier portion (1a) has a first tool carrier side (WTS1), said second carrier portion (1b) has a second tool carrier side (WTS2) and said middle portion (1c) has a third tool carrier side (WTS3), and
wherein said first tool carrier side (WTS1) of said first carrier portion (1a) and said second tool carrier side (WTS2) of said second carrier portion (1b) are arranged on a same first side of said machine frame (1), and said third tool carrier side (WTS3) of said middle portion (1c) is arranged on a second side of said machine frame (1);
- a first work spindle (21), which is arranged on said first carrier portion (1a), for receiving a first workpiece (W1);
- a second work spindle (22), which faces said first work spindle (21) and is arranged on said second carrier portion (1b), for receiving a second workpiece (W2),
wherein the spindle axis of said second work spindle (22) is parallel and coaxial to the spindle axis of said first work spindle (21);
- a first tool carrier slide (51, 53) which is arranged on said first tool carrier side (WTS1) of said first carrier portion (1a) or on said second tool carrier side (WTS2) of said second carrier portion (1b) and on which a first tool carrier (61, 62) is arranged; and
- a second tool carrier slide (52) which is arranged on said third tool carrier side (WTS3) of said middle portion (1c) and on which a second tool carrier (62) is arranged,
wherein said second tool carrier slide (52) can be moved in a first direction (Y) transverse or perpendicular to the spindle axes of said first and second work spindles (21, 22),
wherein said second tool carrier is configured as a tool turret which is arranged between said first work spindle (21) and said second work spindle (22) and comprises a tool-carrying turret head (62) mounted rotatably about a turret axis, and
wherein the turret axis is transverse or perpendicular to the spindle axes of said first and second work spindles (21, 22);
**characterized in that**
said first tool carrier side (WTS1) of said first carrier portion (1a) and said second tool carrier side (WTS2) of said second carrier portion (1b) substantially span a first plane which is inclined with respect to a second plane and with respect to a third plane parallel to said second plane, wherein said second plane is substantially spanned by a first spindle carrier side (STS1) of said first carrier portion (1a), which supports said first work spindle (21), and a second spindle carrier side (STS2) of said second carrier portion (1b), which supports said second work spindle (22), and the third plane is substantially spanned by said third tool carrier side (WTS3) of said middle portion (1c), which supports said third tool carrier side (WTS3).

2. The machine tool according to claim 1 **characterized in that**
the turret axis further is transverse or perpendicular to the first direction (Y) of said second tool carrier slide (52).

3. The machine tool according to claim 1 or 2 **characterized in that**
said turret head (62) has a plurality of supports (3a, 3a', 3a") for receiving tools (T) or tool-carrying tool holders (62a), said tool turret being configured to align a support (3a) with one of said work spindles (21, 22) by rotation of said turret head (62) about the turret axis.

4. The machine tool according to claim 3 **characterized in that**
said supports (3a, 3a') are at least partially arranged in pairs on opposite sides of said turret head (62) such that at least one support (3a') is aligned with said second work spindle (22) when an opposite support (3a) is aligned with said first work spindle (21); or
said supports (3a, 3a') are arranged in pairs on opposite sides of said turret head (62) such that at least one support (3a') is aligned with said second work spindle (22) when an opposite support (3a) is aligned with said first work spindle (21).

5. The machine tool according to one of the preceding claims **characterized in that**
said turret head (62) is configured as a radial turret head, the supports (3a, 3a', 3a") being arranged over the periphery of said turret head (62).

6. The machine tool according to one of the preceding claims **characterized in that**
said turret head (62) is configured as a double or multiple turret head, each side of said turret head having at least two supports (3a, 3a') which are arranged next to one another in direction (X) of the turret axis.

7. The machine tool according to claim 6 **characterized in that**
said turret head (62) is movable in direction (X) of the turret axis such that said tool turret (62) is configured to align a first or a second support (3a', 3a") of one side of said turret head (62) with one of said work spindles (21, 22) by moving said turret head (62) in direction (X) of the turret axis.

8. The machine tool according to one of the preceding claims **characterized in that**
said first and/or second work spindle (21, 22) is movable in direction (Z) of the spindle axes.

9. The machine tool according to one of the preceding claims **characterized in that**
said second tool carrier slide (52) is guided on guide means that are fastened to said third tool carrier side (WTS3) of said middle portion (1c) of said machine frame (1) and are oriented in said first direction (Y).

10. The machine tool according to one of the preceding claims **characterized in that**
said first tool carrier slide (51) is arranged on said first tool carrier side (WTS1) of said first carrier portion (1a), and said machine tool further comprises a third tool carrier slide (53) which is arranged on said second tool carrier side (WTS2) of said second carrier portion (1b) and on which a third tool carrier (63) is arranged.

11. The machine tool according to claim 10 **characterized in that**
said first and/or third tool carrier slide (51, 53) is movable in parallel and/or transversely or perpendicularly to the spindle axes.

12. The machine tool according to claim 11 or 12 **characterized in that**
said first and/or third tool carrier (61, 63) is movable in said first direction (Y) transverse to the spindle axes and/or is movable in a second direction (X) transverse to said first direction (Y) and transverse to the spindle axes.

13. The machine tool of any according to claims 10 to 12 **characterized in that**
said first and/or third tool carrier (61, 63) is configured as a tool turret which comprises a tool-carrying turret head mounted rotatably about a turret axis parallel to the spindle axes.

14. The machine tool according to one of the preceding claims **characterized in that**
said third plane is indented relative to said second plane towards said machine frame (1).

## Revendications

1. Machine-outil, comportant :
- un bâti de machine (1) qui comprend une première portion de support (1a), une seconde portion de support (1b), et une portion centrale (1c) agencée entre les première et seconde portions de support ;
dans laquelle la première portion de support (1a) comprend un premier côté porte-outil (WTS1), la seconde portion de support (1 b) comprend un second côté porte-outil (WTS2) et la portion centrale (1c) comprend un troisième côté porte-outil (WTS3), et
le premier côté porte-outil (WTS1) de la première portion de support (1a) et le second côté porte-outil (WTS2) de la seconde portion de support (1b) sont agencés sur un même premier côté du bâti de machine (1), et le troisième côté porte-outil (WTS3) de la portion centrale (1c) est agencé sur un second côté du bâti de machine (1) ;
- une première broche de travail (21) agencée sur la première portion de support (1a) et destinée à recevoir une première pièce à oeuvrer (W1),
- une seconde broche de travail (22) agencée sur la seconde portion de support (1b), tournée vers la première broche de travail (21) et destinée à recevoir une seconde pièce à oeuvrer (W2),
l'axe de la seconde broche de travail (22) étant orienté parallèlement ou coaxialement à l'axe de la première broche de travail (21) ;
- un premier chariot porte-outil (51 ; 53) agencé sur le premier côté porte-outil (WTS1) de la première portion de support (1a) ou sur le second côté porte-outil (WTS2) de la seconde portion de support (1 b), chariot sur lequel est agencé un premier porte-outil (61 ; 62) ; et
- un second chariot porte-outil (52) agencé sur le troisième côté porte-outil (WTS3) de la portion centrale (1c), sur lequel est agencé un second porte-outil (62),
dans laquelle le second chariot porte-outil (52) est mobile dans une première direction (Y) transversalement ou perpendiculairement aux axes des première et seconde broches de travail (21, 22),
et le second porte-outil est réalisé sous forme de revolver à outils qui est agencé entre la première broche de travail (21) et la seconde broche de travail (22) et qui comprend une tourelle de revolver (62) qui est montée en rotation autour d'un axe de revolver et qui porte des outils,
l'axe de revolver étant orienté transversalement ou perpendiculairement aux axes des première et seconde broches de travail (21, 22),
**caractérisée en ce que**
le premier côté porte-outil (WTS1) de la première portion de support (1a) et le second côté porte-outil (WTS2) de la seconde portion de support (1b) définissent sensiblement un premier plan qui est orienté en oblique par rapport à un second plan et par rapport à un troisième plan orienté parallèlement au second plan, le second plan étant défini sensiblement par un premier côté porte-broche (STS1) de la première portion de support (1a), qui porte la première broche (1b), et par un second côté porte-broche (STS2) de la seconde portion de support (1b), qui porte la seconde broche de travail (22), et le troisième plan est défini sensiblement par le troisième côté porte-outil (WTS3) de la portion centrale (1c) qui porte le troisième chariot porte-outil (WTS3).

2. Machine-outil selon la revendication 1, **caractérisée en ce que** l'axe de revolver est en outre orienté transversalement ou perpendiculairement à la première direction (Y) du second chariot porte-outil (52).

3. Machine-outil selon la revendication 1 ou 2, **caractérisée en ce que** la tourelle de revolver (62) présente une pluralité de logements (3a, 3a', 3a") pour recevoir des outils (T) ou des porte-outils (62a) portant des outils, le revolver à outils étant conçu pour aligner un logement (3a) avec l'une des broches de travail (21, 22) par rotation de la tourelle (62) autour de l'axe de revolver.

4. Machine-outil selon la revendication 3, **caractérisée en ce que**
les logements (3a, 3a') sont disposés au moins partiellement par paire sur des côtés opposés sur la tourelle (62), de telle sorte qu'au moins un logement (3a') est aligné avec la seconde broche de travail (22) lorsqu'un logement opposé (3a) est aligné avec la première broche de travail (21) ; ou les logements (3a, 3a') sont disposés par paire sur des côtés opposés sur la tourelle (62) de telle sorte qu'un logement respectif (3a') est aligné avec la seconde broche de travail (22) lorsqu'un autre logement opposé (3a) est aligné avec la première broche de travail (21).

5. Machine-outil selon l'une des revendications précédentes, **caractérisée en ce que**
la tourelle (62) est réalisée sous forme de tourelle radiale, les logements (3a, 3a', 3a") étant disposés en périphérie sur la tourelle (62).

6. Machine-outil selon l'une des revendications précédentes, **caractérisée en ce que**
la tourelle (62) est réalisée sous forme de tourelle double ou multiple, chaque côté de la tourelle comprenant au moins deux logements (3a', 3a") qui sont juxtaposés en direction (X) de l'axe de revolver.

7. Machine-outil selon la revendication 6, **caractérisée en ce que**
la tourelle (62) est mobile en direction (X) de l'axe de revolver, de telle sorte que le revolver à outils est conçu pour aligner un premier ou un second logement (3a' ; 3a") d'un côté de la tourelle (62) avec l'une des broches de travail (21 ; 22) par déplacement de la tourelle (62) en direction ('X) de l'axe de revolver.

8. Machine-outil selon l'une des revendications précédentes, **caractérisée en ce que**
la première et/ou la seconde broche de travail (21 ; 22) est mobile en direction (Z) des axes des broches.

9. Machine-outil selon l'une des revendications précédentes, **caractérisée en ce que**
le second chariot porte-outil (52) est guidé sur des guidages qui sont fixés sur le troisième côté porte-outil (WT3) de la portion centrale (1c) du bâti de machine (1) et orientés dans la première direction (Y).

10. Machine-outil selon l'une des revendications précédentes, **caractérisée en ce que**
le premier chariot porte-outil (51) est agencé sur le premier côté porte-outil (WTS1) de la première portion de support (1a) et la machine-outil comprend en outre un troisième chariot porte-outil (53) agencé sur le second côté porte-outil (WTS2) de la seconde portion de support (1b), sur lequel est agencé un troisième porte-outil (63).

11. Machine-outil selon la revendication 10, **caractérisée en ce que**
le premier et/ou le troisième chariot porte-outil (51 ; 53) est mobile parallèlement et/ou transversalement et/ou perpendiculairement aux axes des broches.

12. Machine-outil selon la revendication 10 ou 11, **caractérisée en ce que**
le premier et/ou le troisième porte-outil (61 ; 63) est mobile dans la première direction (Y) transversalement aux axes des broches et/ou dans une seconde direction (X) transversalement à la première direction (Y) et transversalement aux axes des broches.

13. Machine-outil selon l'une des revendications 10 à 12, **caractérisée en ce que**
le premier et/ou le troisième porte-outil (61 ; 63) est réalisé sous forme de revolver à outils qui comprend une tourelle de revolver qui est montée en rotation autour d'un axe de revolver orienté parallèlement aux axes des broches et qui porte des outils.

14. Machine-outil selon l'une des revendications précédentes, **caractérisée en ce que**
le troisième plan est rétracté par rapport au second plan vers le bâti de machine (1).
